# EUROPEAN PATENT SPECIFICATION

(11) **EP 3 051 782 B1**
(45) Date of publication and mention of the grant of the patent: **30.01.2019**
(21) Application number: 14848158.3
(22) Date of filing: 24.04.2014
(51) Int. Cl.: G10L 15/22, H04M 1/2745, H04M 1/725, H04W 4/14, H04M 1/27, H04M 3/42, H04W 4/12

(54) **METHOD AND SYSTEM FOR SENDING CONTACT INFORMATION IN CALL PROCESS**
VERFAHREN UND SYSTEM ZUM SENDEN VON KONTAKTINFORMATIONEN IN EINEM ANRUFVERFAHREN
PROCÉDÉ ET SYSTÈME POUR ENVOYER DES INFORMATIONS DE CONTACT DANS UN PROCESSUS D'APPEL

(30) Priority: 29.09.2013 CN 201310453293
(43) Date of publication of application: 03.08.2016
(73) Proprietor: Huizhou TCL Mobile Communication Co., Ltd., Huizhou, Guangdong 516006 (CN)
(72) Inventor: YANG, Yan, Huizhou Guangdong 516006 (CN); TANG, Xiangdong, Huizhou Guangdong 516006 (CN)
(74) Representative: Brachmann, Roland W.
(86) International application number: PCT/CN2014/076150
(87) International publication number: WO 2015/043173

(56) References cited:
- CN-A- 101 426 053
- CN-A- 101 931 701
- CN-A- 102 111 483
- CN-A- 103 167 120
- CN-A- 103 281 425
- CN-A- 103 491 257

## Description

The present invention relates to the field of mobile communication devices and in particular to a method and system for transmitting contact information during a call.

Along with the improvement of people's living standard and rapid development of science and technology, a variety of communication terminals, such as cell phones, are used in daily life and work. When people are using cell phones, such a situation is commonly encountered: during a call, other people's contact information needs to be transmitted to the other party of the communication, but the cell phone is in the middle of the call. Currently the following three ways are commonly used to handle the situation:
1. Staying in the calling state, but suspending the communication with the other party, entering the phone directory to look for the corresponding contact, and telling the other party while looking for the phone number. To confirm that the other party has correctly received the phone number at this time, devices such as hands-free or headsets have to be used. Clearly, this way has complicated steps and is very inconvenient to use;
2. Staying in the calling state, but suspending the communication with the other party, entering the phone directory to look for the corresponding contact, which is transmitted in the form of a text message to the other party. Just like the first processing way, this way causes inconvenience to operations of the subscriber and requires suspension of the call;
3. Transmitting in the form of a text message to the other party when the call is ended. Clearly, this way cannot be done in real time and people tend to forget.

All of the above three ways have various drawbacks. Further prior art known is CN 102 111 483 A. There it is disclosed to use speech commands for retrieving contact information. However, this is done without suitable control of the user about correctness of the retrieved contact information.

Therefore, the prior art still needs to be improved and developed.

In light of the above drawback of the prior art, the object of the present invention is to provide a method and system for transmitting contact information during a call so as to solve the problem that current processing ways have complex operations and cannot be real time.

This problem is solved according to the features of the independent claims. Further embodiments result from the depending claims.

Advantageous effects: according to the present invention, the voice data inputted by a subscriber is extracted during a call, and the subscriber's voice data is matched with the predetermined voice control commands, when the correct voice control command is matched, the contact list is searched for corresponding contact information, and the found contact information is transmitted to the other party of the call. The present invention does not affect the subscriber's call during the information transmission process, nor does it require manual operations by the subscriber. As a result, it is very easy to use and the operations are very convenient.

The aforementioned characteristics, features and advantages of the invention as well as the way they are achieved will be further illustrated in connection with the following examples and considerations as discussed in view of the figures.
- Fig.1: is a flow chart of a preferred embodiment of the method for transmitting contact information during a call according to the present invention.
- Fig.2: is a specific flow chart of Step S104 in the method shown in Fig.1.
- Fig.3: is a flow chart of another embodiment of the method for transmitting contact information during a call according to the present invention.
- Fig.4: is a structural block diagram of the principle of a preferred embodiment of the system for transmitting contact information during a call according to the present invention.
- Fig.5: is a specific structural block diagram of the transmission module in the system shown in Fig.4.

The present invention provides a method and system for transmitting contact information during a call. To make the object, technical solution and effect of the present invention clearer and more specific, the present invention will be further described in detail below. It should be understood that the specific embodiments herein are only used to describe the present invention, rather than to limit the present invention.

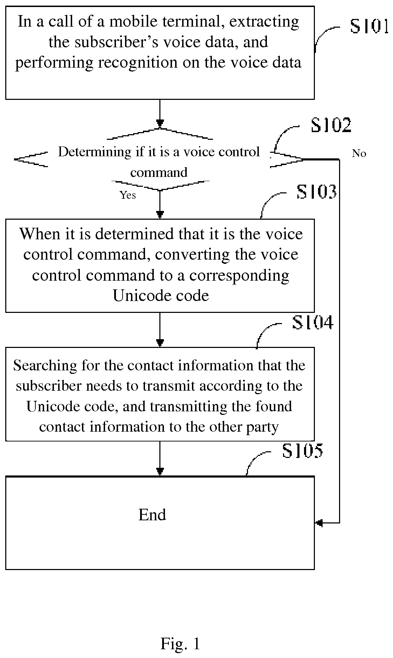

Please refer to Fig.1, and Fig.1 illustrates the method for transmitting contact information during a call according to the present invention, comprising:
S101. In a call of a mobile terminal, extracting the subscriber's voice data, and performing recognition on the voice data;
S102. Determining if it is a voice control command;
S103. When it is determined that the voice data is the voice control command, converting the voice control command to a corresponding Unicode code;
S104. Searching for the contact information that the subscriber needs to transmit according to the Unicode code, and transmitting the found contact information to the other party.

First, in Step S101, extracting the subscriber's voice data, and performing recognition on the voice data. Since the subscriber is always in the speaking state during the call, countless inputs will be received at this moment, and at this moment, it is necessary to extract the subscriber's voice data, and perform recognition on them.

Specifically, first pre-receiving a voice control command inputted by the subscriber for controlling the transmission of contact information, and storing the voice control command in the model library. In such a way, a number of voice control commands are stored in the model library, and when the subscriber needs to transmit contact information, he just needs to issue such a voice control command using sound.

Subsequently, performing feature extraction on the voice data, and matching the extracted features with the voice control commands stored in the model library. For feature extraction on the voice data, pre-processing, such as noise removal and cleaning, needs to be performed first to remove some noises, then perform feature extraction, match the extracted features with the voice control commands stored in the model library, and finally output the matching result.

Furthermore, Step S102 comprises: determining if the voice data is a voice control command according to the matching results;
Furthermore, Step S103 comprises: when the subscriber's voice data contains the voice control command, converting the voice control command to a corresponding Unicode code;
Furthermore, Step S104 comprises: it is necessary to search for a contact according to the Unicode code, and then transmitting the found contact information to the other party.

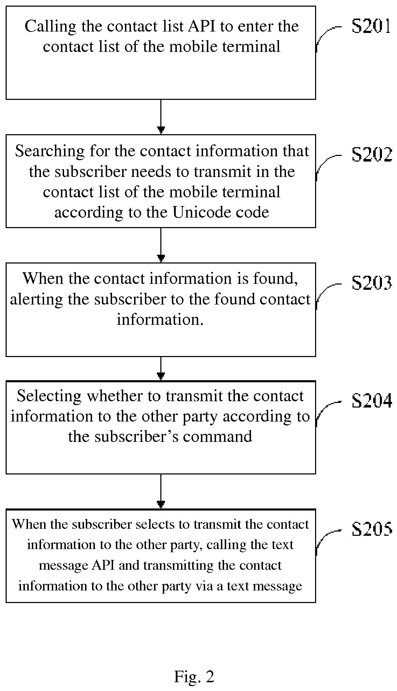

As shown in Fig.2, Step S104 further comprises:
S201. Calling the contact list API (Application Programming Interface) to enter the contact list of the mobile terminal; this step is to call the phone directory and go to Step S202.
S202. Searching for the contact information that the subscriber needs to transmit in the contact list of the mobile terminal according to the Unicode code; specifically, searching for the contact through SQlite (a relational database management system in compliance with ACID), wherein ACID is an abbreviation of four basic elements for the correct execution of database transactions, comprising Atomicity, Consistency, Isolation and Durability. Both Step S201 and Step S202 are backend operations, which do not affect a subscriber's calls.
S203. When the contact information is found, alerting the subscriber to the found contact information. When the contact information is found, displaying the contact information, providing options to the subscriber, and asking the subscriber whether to transmit the contact information.
S204. Selecting whether to transmit the contact information to the other party according to the subscriber's command; the subscriber may select to transmit or not to transmit based whether the contact information is correct.
S205. When the subscriber selects to transmit the contact information to the other party, calling the text message API and transmitting the contact information to the other party via a text message. When it is confirmed to be correct, the contact information may be transmitted to the other party in the form of a text message, or may be transmitted to the other party in other current ways of information transmission.

When the subscriber finds that the found contact information is not correct, or no corresponding contact is found, he may select whether to search again, if "yes" is selected, return to Step S202 to search again, otherwise the entire flow is ended.

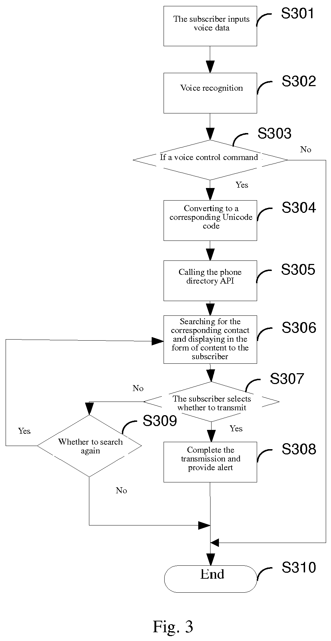

The implementation process of the present invention will be described below in detail through a specific embodiment, as shown in Fig.3, which comprises:
Step S301. The subscriber inputs voice data;
Step S302. Performing voice recognition;
Step S303. Determining if the voice data inputted by the subscriber is a voice control command; if yes, go to Step S304, otherwise go to Step S310;
Step S304. Converting the voice control command to a Unicode code;
Step S305. Calling the phone directory API;
Step S306. Searching for the corresponding contact and displaying in the form of content to the subscriber;
Step S307. The subscriber selects whether to transmit; if yes, go to Step S308, otherwise go to Step S309;
Step S308. The transmission is completed, and the subscriber is alerted;
Step S309. Whether to search again;
Step S310. The flow ends.

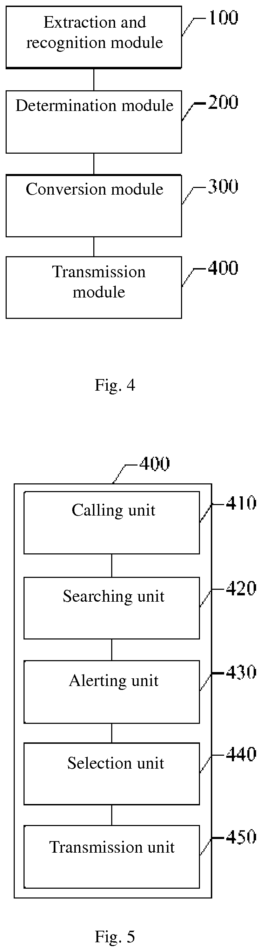

Based on the above method, the present invention further provides a system for transmitting contact information during a call, as shown in Fig.4, which comprises:
An extraction and recognition module 100 for, in a call of a mobile terminal, extracting the subscriber's voice data, and performing recognition on the voice data;
A determination module 200 for determining if it is a voice control command;
A conversion module 300 for, when it is the voice control command, converting the voice control command to a corresponding Unicode code;

A transmission module 400 for searching for the contact information that the subscriber needs to transmit according to the Unicode code, and transmitting the found contact information to the other party. Technical details of the above module unit have been described in detail in the method above, which will not be repeated herein.

Moreover, the system for transmitting contact information during a call further comprises:
A predetermination module 500 for pre-receiving a voice control command inputted by the subscriber for controlling the transmission of contact information, and storing in the model library. Technical details of the above module unit have been described in detail in the method above, which will not be repeated herein.

Moreover, the extraction and recognition module 100 comprises:
A matching unit for performing feature extraction on the voice data, and matching the extracted features with the voice control commands stored in the model library.

Technical details of the above module unit have been described in detail in the method above, which will not be repeated herein.

Moreover, as shown in Fig.5, the transmission module 400 comprises:
A calling unit 410 for calling the contact list API to enter the contact list of the mobile terminal;
A searching unit 420 for searching for the contact information that the subscriber needs to transmit in the contact list of the mobile terminal according to the Unicode code;
An alerting unit 430 for, when the contact information is found, alerting the subscriber to the found contact information;
A selection unit 440 for selecting whether to transmit the contact information to the other party according to the subscriber's command;
A transmission unit 450 for, when the subscriber selects to transmit the contact information to the other party, calling the text message API and transmitting the contact information to the other party via a text message. Technical details of the above module units have been described in detail in the method above, which will not be repeated herein.

The system for transmitting contact information during a call according to the embodiment of the present invention is embodied on a terminal, said terminal being, for example, a computer, a tablet, a cell phone, etc., and the system for transmitting contact information during a call belongs to the same concept of the method for transmitting contact information during a call in the embodiment above, any method provided in the embodiment of methods for transmitting contact information during a call may be run on the system for transmitting contact information during a call. See the embodiment of the method for transmitting contact information during a call for the detailed implementation process, which will not be repeated herein.

It should be noted that with respect to the method for transmitting contact information during a call according to the embodiment of the present invention, those skilled in the art may understand that all or a part of the flow of the method for transmitting contact information during a call according to the embodiment of the present invention may be completed by a computer program through controlling relevant hardware, said computer program may be stored in a computer readable memory medium, for example, stored in the terminal's memory, and be executed by at least one processor in the terminal, and the execution process may include, for example, flows in the embodiment of all of the above methods, wherein the memory medium may be a disk, a CD, a ROM or a RAM.

With respect to the system for transmitting contact information during a call according to the embodiment of the present invention, all function modules thereof may be integrated in a processing chip, or all function modules may have independent physical presence, or two or more modules are integrated in a module. The above integrated module may either be embodied in the form of hardware or be embodied in the form of a software function module. If the integrated module is embodied in the form of a software function module and sold or used as an independent product, it may also be stored in a computer readable memory medium, said memory medium being, for example, a ROM, a disk or a CD.

In summary, according to the present invention, the voice data inputted by a subscriber is extracted during a call, and the subscriber's voice data is matched with the predetermined voice control commands, when the correct voice control command is matched, the contact list is searched for corresponding contact information, and the found contact information is transmitted to the other party of the call. The present invention does not affect the subscriber's call during the information transmission process, nor does it require manual operations by the subscriber. As a result, it is very easy to use and the operations are very convenient.

It should be understood that applications of the present invention are not limited to the above examples. To those skilled in the art, improvements or modifications may be made according to the above description, and all of these improvements or modifications shall be encompassed by the appended claims of the present invention.

## Claims

1. A method for transmitting contact information during a call, wherein it comprises:
- During a call of a mobile terminal, extracting the subscriber's voice data, and performing recognition on the voice data;
- Determining if the voice data comprises a voice control command;
- When it is the voice control command, converting the voice control command to a corresponding Unicode code; and
- Searching for the contact information that the subscriber needs to transmit according to the Unicode code, and transmitting the found contact information to the other party;
- wherein the step of searching for the contact information that the subscriber needs to transmit according to the Unicode code and transmitting the found contact information to the other party comprises:
- Calling the contact list application programming interface to enter the contact list of the mobile terminal;
- Searching for the contact information that the subscriber needs to transmit in the contact list of the mobile terminal according to the Unicode code; and
- When the contact information is found, alerting the subscriber to the found contact information;
- wherein after the step of, when the contact information is found, alerting the subscriber to the found contact information, it further comprises:
- Selecting whether to transmit the contact information to the other party according to the subscriber's command; and
- When the subscriber selects to transmit the contact information to the other party, calling a text message API and transmitting the contact information to the other party via a text message;
- wherein searching for the contact information that the subscriber needs to transmit in the contact list of the mobile terminal according to the Unicode code includes searching for the contact information through SQlite; and
- wherein the step of, calling the contact list application programming interface to enter the contact list of the mobile terminal and the step of, searching for the contact information that the subscriber needs to transmit in the contact list of the mobile terminal according to the Unicode code, are backend operations.

2. The method for transmitting contact information during a call according to claim 1, wherein prior to the step of, in a call of a mobile terminal, extracting the subscriber's voice data and performing recognition on the voice data, it comprises:
- Pre-receiving a voice control command inputted by the subscriber for controlling the transmission of contact information, and storing it in the model library.

3. The method for transmitting contact information during a call according to any of the preceding claims, wherein the step of, in a call of a mobile terminal, extracting the subscriber's voice data and performing recognition on the voice data comprises:
- Performing feature extraction on the voice data, and matching the extracted features with the voice control commands stored in the model library.

4. The method for transmitting contact information during a call according to any of the preceding claims, wherein the method for transmitting contact information during a call further comprises:
- When the found contact information is incorrect, it may select whether to search again, if it selects to search again, returning to the step of searching for the contact information that the subscriber needs to transmit in the contact list of the mobile terminal according to the Unicode code, and searching again.

5. The method for transmitting contact information during a call according to any of the preceding claims, wherein the method for transmitting contact information during a call further comprises:
- When no corresponding contact is found, it may select whether to search again, if it selects to search again, return to the step of searching for the contact information that the subscriber needs to transmit in the contact list of the mobile terminal according to the Unicode code, and searching again.

6. A system for transmitting contact information during a call, wherein the system for transmitting contact information during a call comprises:
- An extraction and recognition module adapted to extract, during a call of a mobile terminal, the subscriber's voice data, and performing recognition on the voice data;
- A determination module for determining if the voice data comprises a voice control command;
- A conversion module adapted to convert, when it is the voice control command, the voice control command to a corresponding Unicode code; and
- A transmission module adapted to search for the contact information that the subscriber needs to transmit according to the Unicode code, and further adapted to transmit the found contact information to the other party,
- wherein the transmission module comprises:
- A calling unit adapted to call the contact list API to enter the contact list of the mobile terminal;
- A searching unit adapted to search for the contact information that the subscriber needs to transmit in the contact list of the mobile terminal according to the Unicode code; and
- An alerting unit adapted to alert, when the contact information is found, the subscriber to the found contact information,
- wherein the transmission module further comprises:
- A selection unit adapted to select whether to transmit the contact information to the other party according to the subscriber's command;
- A transmission unit adapted to call, when the subscriber selects to transmit the contact information to the other party, a text message API and to transmit the contact information to the other party via a text message;
- wherein the searching unit is adapted to search for the contact information through SQlite; and
- wherein the calling unit and the searching unit are adapted to perform the calling of the contact list and the searching for the contact information as backend operations.

7. The system for transmitting contact information during a call according to claim 6, wherein the system for transmitting contact information during a call further comprises:
- A predetermination module for pre-receiving a voice control command inputted by the subscriber for controlling the transmission of contact information, and storing in the model library.

8. The system for transmitting contact information during a call according to any of claims 6 or 7, wherein the extraction and recognition module comprises:
- A matching unit for performing feature extraction on the voice data, and matching the extracted features with the voice control commands stored in the model library.

9. A storage medium, which stores processor executable commands therein, wherein the processor may execute commands to let the processor complete the following operations:
- During a call of a mobile terminal, extracting the subscriber's voice data, and performing recognition on the voice data;
- Determining if the voice data comprises a voice control command;
- When it is the voice control command, converting the voice control command to a corresponding Unicode code;
- Searching for the contact information that the subscriber needs to transmit according to the Unicode code, and transmitting the found contact information to the other party;
- wherein the step of searching for the contact information that the subscriber needs to transmit according to the Unicode code and transmitting the found contact information to the other party comprises:
- Calling the contact list application programming interface to enter the contact list of the mobile terminal;
- Searching for the contact information that the subscriber needs to transmit in the contact list of the mobile terminal according to the Unicode code; and
- When the contact information is found, alerting the subscriber to the found contact information; and
- wherein after the step of, when the contact information is found, alerting the subscriber to the found contact information, it further comprises:
- Selecting whether to transmit the contact information to the other party according to the subscriber's command;
- When the subscriber selects to transmit the contact information to the other party, calling a text message API and transmitting the contact information to the other party via a text message;
- wherein searching for the contact information that the subscriber needs to transmit in the contact list of the mobile terminal according to the Unicode code includes searching for the contact information through SQlite; and
- wherein Calling the contact list application programming interface to enter the contact list of the mobile terminal and Searching for the contact information that the subscriber needs to transmit in the contact list of the mobile terminal according to the Unicode code, are backend operations.

## Patentansprüche

1. Verfahren, zum Senden von Kontaktinformation während eines Anrufs umfassend:
- Extrahieren der Sprachdaten des Teilnehmers während eines Anrufs eines mobilen Endgeräts und Durchführen einer Erkennung an den Sprachdaten;
- Bestimmen, ob die Sprachdaten einen Sprachsteuerungsbefehl enthalten;
- Umwandeln des Sprachsteuerungsbefehls zu einem entsprechenden Unicode-Code, wenn der Sprachsteuerungsbefehl vorliegt; und
- Suchen nach Kontaktinformationen, die der Teilnehmer gemäß dem Unicode-Code senden muss und Senden der gefundenen Kontaktinformation zur Gegenseite; wobei
- der Schritt des Suchens nach Kontaktinformation, die der Teilnehmer gemäß dem Unicode-Code senden muss und des Sendens der gefundenen Kontaktinformation zur Gegenseite Folgendes umfasst:
- Aufrufen der Kontaktlisten-Anwendungsprogrammierschnittstelle, um in die Kontaktliste des mobilen Endgeräts einzutreten;
- Suchen nach der Kontaktinformation, die der Teilnehmer gemäß dem Unicode-Code senden muss, in der Kontaktliste des mobilen Endgeräts; und
- Benachrichtigen des Teilnehmers über die gefundene Kontaktinformation, wenn die Kontaktinformation gefunden worden ist; wobei
- das Verfahren nach dem Schritt des Informierens des Teilnehmers über die gefundene Kontaktinformation, wenn die Kontaktinformation gefunden worden ist, ferner Folgendes umfasst:
- Auswählen gemäß dem Befehl des Teilnehmers, ob die Kontaktinformation zur Gegenseite gesendet werden soll; und
- Aufrufen einer Textnachricht-API und Senden der Kontaktinformation zur Gegenseite mittels einer Textnachricht, wenn der Teilnehmer auswählt, die Kontaktinformation zur Gegenseite zu senden; wobei
- das Suchen nach Kontaktinformation, die der Teilnehmer gemäß dem Unicode-Code senden muss, in der Kontaktliste des mobilen Endgeräts das Suchen der Kontaktinformation über SQlite enthält; und
- wobei der Schritt des Aufrufens der Kontaktlisten-Anwendungsprogrammierschnittstelle, um in die Kontaktliste des mobilen Endgeräts einzutreten, und der Schritt des Suchens nach Kontaktinformation, die der Teilnehmer gemäß dem Unicode-Code senden muss, in der Kontaktliste des mobilen Endgeräts nachgeschaltete Vorgänge sind.

2. Verfahren zum Senden von Kontaktinformation während eines Anrufs, nach Anspruch 1, wobei es vor dem Schritt des Extrahierens der Sprachdaten des Teilnehmers in einem Anruf eines mobilen Endgeräts und des Durchführens einer Erkennung an den Sprachdaten Folgendes umfasst:
- Vorempfangen eines Sprachsteuerungsbefehls, der durch den Teilnehmer eingegeben wurde, um das Senden von Kontaktinformationen zu steuern, und sein Speichern in der Modellbibliothek.

3. Verfahren zum Senden von Kontaktinformation während eines Anrufs, nach einem der vorhergehenden Ansprüche, wobei der Schritt des Extrahierens der Sprachdaten des Teilnehmers in einem Anruf eines mobilen Endgeräts und des Durchführens einer Erkennung an den Sprachdaten Folgendes umfasst:
- Durchführen einer Merkmalsextraktion an den Sprachdaten und Abgleichen der extrahierten Merkmale mit den Sprachsteuerungsbefehlen, die in der Modellbibliothek gespeichert sind.

4. Verfahren zum Senden von Kontaktinformation während eines Anrufs, nach einem der vorhergehenden Ansprüche, wobei das Verfahren zum Senden von Kontaktinformation während eines Anrufs, ferner aufweist:
- wenn die gefundene Kontaktinformation inkorrekt ist, kann ausgewählt werden, ob erneut gesucht werden soll und wenn ausgewählt worden ist, erneut zu suchen, Zurückkehren zum Schritt des Suchens nach der Kontaktinformation, die der Teilnehmer gemäß dem Unicode-Code senden muss, in der Kontaktliste des mobilen Endgeräts und erneutes Suchen.

5. Verfahren zum Senden von Kontaktinformation während eines Anrufs, nach einem der vorhergehenden Ansprüche, wobei das Verfahren zum Senden der Kontaktinformation während eines Anrufs, ferner aufweist:
- wenn kein entsprechender Kontakt gefunden worden ist, kann ausgewählt werden, ob erneut gesucht werden soll und wenn ausgewählt wird, erneut zu suchen, Zurückkehren zum Schritt des Suchens nach Kontaktinformation, die der Teilnehmer gemäß dem Unicode-Code senden muss, in der Kontaktlisten des mobilen Endgeräts und erneutes Suchen.

6. System zum Senden von Kontaktinformation während eines Anrufs, wobei das System zum Senden der Kontaktinformation während eines Anrufs aufweist:
- ein Extraktions- und Erkennungsmodul, das ausgelegt ist, die Sprachdaten des Teilnehmers während eines Anrufs eines mobilen Endgeräts zu extrahieren und eine Erkennung an den Sprachdaten durchzuführen;
- ein Bestimmungsmodul, um zu bestimmen, ob die Sprachdaten einen Sprachsteuerungsbefehl enthalten;
- ein Umwandlungsmodul, das ausgelegt ist, den Sprachsteuerungsbefehl in einen entsprechenden Unicode-Code umzuwandeln, wenn der Sprachsteuerungsbefehl vorliegt; und
- ein Sendemodul, das ausgelegt ist, die Kontaktinformation, die der Teilnehmer gemäß dem Unicode-Code senden muss, zu suchen und ferner ausgelegt ist, die gefundene Kontaktinformation zur Gegenseite zu senden; wobei
- das Sendemodul aufweist:
- eine Aufrufeinheit, die ausgelegt ist, die Kontaktlisten-API aufzurufen, um in die Kontaktliste des mobilen Endgeräts einzutreten;
- eine Sucheinheit, die ausgelegt ist, die Kontaktinformation, die der Teilnehmer gemäß dem Unicode-Code senden muss, in der Kontaktliste des mobilen Endgeräts zu suchen; und
- eine Benachrichtigungseinheit, die ausgelegt ist, den Teilnehmer über die gefundene Kontaktinformation zu benachrichtigen, wenn die Kontaktinformation gefunden worden ist; wobei
- das Sendemodul ferner Folgendes enthält:
- eine Auswahleinheit, die ausgelegt ist, gemäß dem Befehl des Teilnehmers auszuwählen, ob die Kontaktinformation zur Gegenseite gesendet werden soll; und
- eine Sendeeinheit, die ausgelegt ist, eine Textnachricht-API aufzurufen und die Kontaktinformation mittels einer Textnachricht zur Gegenseite zu senden, wenn der Teilnehmer auswählt, die Kontaktinformation zur Gegenseite zu senden; wobei
- die Sucheinheit ausgelegt ist, die Kontaktinformation über SQlite zu suchen; und
- die Aufrufeinheit und die Sucheinheit ausgelegt sind, das Aufrufen der Kontaktliste und das Suchen der Kontaktinformation als nachgeschaltete Vorgänge durchzuführen.

7. System zum Senden von Kontaktinformation während eines Anrufs nach Anspruch 6, wobei das System, zum Senden der Kontaktinformation während des Anrufs, ferner aufweist:
- ein Vorbestimmungsmodul, um einen Sprachsteuerungsbefehl, der durch den Teilnehmer eingegeben wurde, um das Senden von Kontaktinformationen zu steuern, vorab zu empfangen und ihn in der Modellbibliothek zu speichern.

8. System zum Senden von Kontaktinformation während eines Anrufs, nach einem der Ansprüche 6 oder 7, wobei das Extraktions- und Erkennungsmodul Folgendes enthält:
- eine Abgleicheinheit, um eine Merkmalsextraktion an den Sprachdaten durchzuführen und die extrahierten Merkmale mit den Sprachsteuerungsbefehlen, die in der Modellbibliothek gespeichert sind, abzugleichen.

9. Speichermedium, in dem durch einen Prozessor ausführbare Anweisungen gespeichert sind, wobei der Prozessor Anweisungen ausführen kann, um den Prozessor die Folgenden Vorgänge abschließen zu lassen:
- Extrahieren der Sprachdaten des Teilnehmers während eines Anrufs eines mobilen Endgeräts und Durchführen einer Erkennung an den Sprachdaten;
- Bestimmen, ob die Sprachdaten einen Sprachsteuerungsbefehl enthalten;
- Umwandeln des Sprachsteuerungsbefehls in einen entsprechenden Unicode-Code, wenn der Sprachsteuerungsbefehl vorliegt; und
- Suchen nach der Kontaktinformation, die der Teilnehmer senden muss, gemäß dem Unicode-Code und Senden der gefundenen Kontaktinformation zur Gegenseite; wobei
- der Schritt des Suchens nach der Kontaktinformation, die der Teilnehmer senden muss, gemäß dem Unicode-Code und des Sendens der gefundenen Kontaktinformation zur Gegenseite Folgendes umfasst:
- Aufrufen der Kontaktlisten-Anwendungsprogrammierschnittstelle, um in die Kontaktliste des mobilen Endgeräts einzutreten;
- Suchen der Kontaktinformation, die der Teilnehmer gemäß dem Unicode-Code senden muss, in der Kontaktliste des mobilen Endgeräts; und
- Benachrichtigen des Teilnehmers über die gefundene Kontaktinformation, wenn die Kontaktinformation gefunden worden ist; wobei
- er nach dem Schritt des Informierens des Teilnehmers über die gefundene Kontaktinformation, wenn die Kontaktinformation gefunden worden ist, ferner Folgendes umfasst:
- Wählen gemäß dem Befehl des Teilnehmers, ob die Kontaktinformation zur Gegenseite gesendet werden soll; und
- Aufrufen einer Textnachricht-API und Senden der Kontaktinformation zur Gegenseite mittels einer Textnachricht, wenn der Teilnehmer auswählt, die Kontaktinformation zur Gegenseite zu senden; wobei
- das Suchen der Kontaktinformation, die der Teilnehmer gemäß dem Unicode-Code senden muss, in der Kontaktliste des mobilen Endgeräts das Suchen der Kontaktinformation über SQlite enthält; und
- das Aufrufen der Kontaktlisten-Anwendungsprogrammierschnittstelle, um in die Kontaktliste des mobilen Endgeräts einzutreten, und das Suchen der Kontaktinformation, die der Teilnehmer gemäß dem Unicode-Code senden muss, in der Kontaktliste des mobilen Endgeräts nachgeschaltete Vorgänge sind.

## Revendications

1. Procédé pour transmettre des informations de contact au cours d'un appel, le procédé comprenant les étapes suivantes :
- au cours d'un appel d'un terminal mobile, extraire les données vocales de l'abonné, et procéder à une reconnaissance sur les données vocales ;
- déterminer si les données vocales comprennent une commande vocale ;
- lorsqu'il s'agit de la commande vocale, convertir la commande vocale en un code Unicode correspondant ; et
- rechercher des informations de contact que l'abonné doit transmettre conformément au code Unicode, et transmettre les informations de contact trouvées à l'autre partie ;
- où l'étape de recherche des informations de contact que l'abonné doit transmettre conformément au code Unicode et de transmission des informations de contact trouvées à l'autre partie comprend les étapes suivantes :
- appeler l'interface de programmation de l'application de liste de contacts pour entrer dans la liste de contacts du terminal mobile ;
- rechercher les informations de contact que l'abonné doit transmettre dans la liste de contacts du terminal mobile conformément au code Unicode ; et
- lorsque les informations de contact sont trouvées, alerter l'abonné des informations de contact trouvées ;
- où, après l'étape comprenant d'alerter l'abonné des informations de contact trouvées lorsque les informations de contact sont trouvées, le procédé comprend en outre les étapes suivantes :
- sélectionner s'il convient de transmettre, ou non, les informations de contact à l'autre partie conformément à la commande de l'abonné ; et
- lorsque l'abonné sélectionne de transmettre les informations de contact à l'autre partie, appeler une API de message texte et transmettre les informations de contact à l'autre partie par l'intermédiaire d'un message texte ;
- où la recherche des informations de contact que l'abonné doit transmettre dans la liste de contacts du terminal mobile conformément au code Unicode comprend de rechercher des informations de contact par l'intermédiaire de SQlite ; et
- où l'étape comprenant d'appeler l'interface de programmation d'application de liste de contacts pour entrer dans la liste de contacts du terminal mobile et l'étape comprenant de rechercher les informations de contact que l'abonné doit transmettre dans la liste de contacts du terminal mobile conformément au code Unicode sont des opérations en arrière-plan.

2. Procédé de transmission d'informations de contact au cours d'un appel selon la revendication 1, dans lequel, avant l'étape comprenant d'extraire les données vocales de l'abonné dans un appel d'un terminal mobile et de procéder à une reconnaissance sur les données vocales, le procédé comprend l'étape suivante :
- prérecevoir une commande vocale entrée par l'abonné pour contrôler la transmission des informations de contact, et stocker celle-ci dans la bibliothèque de modèles.

3. Procédé de transmission d'informations de contact au cours d'un appel selon l'une quelconque des revendications précédentes, dans lequel l'étape comprenant, dans un appel d'un terminal mobile, d'extraire les données vocales de l'abonné et de procéder à une reconnaissance sur les données vocales comprend les étapes suivantes :
- procéder à l'extraction de caractéristiques sur les données vocales, et faire correspondre les caractéristiques extraites avec les commandes vocales stockées dans la bibliothèque de modèles.

4. Procédé pour transmettre des informations de contact au cours d'un appel conformément à l'une quelconque des revendications précédentes, dans lequel le procédé pour transmettre des informations de contact au cours d'un appel comprend en outre les étapes suivantes :
- lorsque les informations de contact trouvées sont incorrectes, sélectionner s'il convient, ou non, de procéder à une nouvelle recherche ; si une nouvelle recherche est sélectionnée, revenir à l'étape de recherche des informations de contact que l'abonné doit transmettre dans la liste des contacts du terminal mobile conformément au code Unicode, et procéder à une nouvelle recherche.

5. Procédé pour transmettre des informations de contact au cours d'un appel selon l'une quelconque des revendications précédentes, dans lequel le procédé pour transmettre des informations de contact au cours d'un appel comprend en outre les étapes suivantes :
- lorsqu'aucun contact correspondant n'est trouvé, sélectionner s'il convient, ou non, de procéder à une nouvelle recherche ; si une nouvelle recherche est sélectionnée, revenir à l'étape de recherche des informations de contact que l'abonné doit transmettre dans la liste de contacts du terminal mobile conformément au code Unicode, et procéder à une nouvelle recherche.

6. Système pour transmettre des informations de contact au cours d'un appel, dans lequel le système pour transmettre des informations de contact au cours d'un appel comprend :
- un module d'extraction et de reconnaissance adapté pour extraire, au cours d'un appel d'un terminal mobile, les données vocales de l'abonné, et procéder à une reconnaissance sur les données vocales ;
- un module de détermination pour déterminer si les données vocales comprennent une commande vocale ;
- un module de conversion adapté pour convertir, lorsqu'il s'agit de la commande vocale, la commande vocale en un code Unicode correspondant ; et
- un module de transmission adapté pour rechercher les informations de contact que l'abonné doit transmettre conformément au code Unicode, et en outre adapté pour transmettre les informations de contact trouvées à l'autre partie,
- où le module de transmission comprend :
- une unité d'appel adaptée pour appeler l'API de liste de contacts pour entrer dans la liste de contacts du terminal mobile ;
- une unité de recherche adaptée pour rechercher les informations de contact que l'abonné doit transmettre dans la liste de contacts du terminal mobile conformément au code Unicode ; et
- une unité d'alerte adaptée pour alerter l'abonné, lorsque les informations de contact sont trouvées, des informations de contact trouvées,
- où le module de transmission comprend en outre :
- une unité de sélection adaptée pour sélectionner s'il convient, ou non, de transmettre les informations de contact à l'autre partie conformément à la commande de l'abonné ;
- une unité de transmission adaptée pour appeler, lorsque l'abonné sélectionne de transmettre les informations de contact à l'autre partie, une API de message texte, et pour transmettre les informations de contact à l'autre partie par l'intermédiaire d'un message texte ;
- où l'unité de recherche est adaptée pour rechercher les informations de contact par l'intermédiaire de SQlite ; et
- où l'unité appelante et l'unité de recherche sont adaptées pour procéder à l'appel de la liste de contacts et à la recherche des informations de contact sous la forme d'opérations en arrière-plan.

7. Système pour transmettre des informations de contact au cours d'un appel selon la revendication 6, dans lequel le système pour transmettre des informations de contact au cours d'un appel comprend en outre :
- un module de prédétermination pour prérecevoir une commande vocale entrée par l'abonné pour contrôler la transmission des informations de contact, et stocker celle-ci dans la bibliothèque de modèles.

8. Système pour transmettre des informations de contact au cours d'un appel selon l'une quelconque des revendications 6 ou 7, dans lequel le module d'extraction et de reconnaissance comprend :
- une unité d'appariement pour procéder à l'extraction de caractéristiques sur les données vocales et faire correspondre les caractéristiques extraites avec les commandes vocales stockées dans la bibliothèque de modèles.

9. Support de stockage qui stocke des commandes exécutables par un processeur, où le processeur peut exécuter des commandes pour permettre au processeur d'exécuter les opérations suivantes :
- au cours d'un appel d'un terminal mobile, extraire les données vocales de l'abonné et procéder à une reconnaissance sur les données vocales ;
- déterminer si les données vocales comprennent une commande vocale ;
- lorsqu'il s'agit de la commande vocale, convertir la commande vocale en un code Unicode correspondant ; et
- rechercher des informations de contact que l'abonné doit transmettre conformément au code Unicode, et transmettre les informations de contact trouvées à l'autre partie ;
- où l'étape de recherche des informations de contact que l'abonné doit transmettre conformément au code Unicode et de transmission des informations de contact trouvées à l'autre partie comprend les étapes suivantes :
- appeler l'interface de programmation de l'application de liste de contacts pour entrer dans la liste de contacts du terminal mobile ;
- rechercher les informations de contact que l'abonné doit transmettre dans la liste de contacts du terminal mobile conformément au code Unicode ; et
- lorsque les informations de contact sont trouvées, alerter l'abonné des informations de contact trouvées ;
- où, après l'étape comprenant d'alerter l'abonné des informations de contact trouvées lorsque les informations de contact sont trouvées, le procédé comprend en outre les étapes suivantes :
- sélectionner s'il convient de transmettre, ou non, les informations de contact à l'autre partie conformément à la commande de l'abonné ; et
- lorsque l'abonné sélectionne de transmettre les informations de contact à l'autre partie, appeler une API de message texte et transmettre les informations de contact à l'autre partie par l'intermédiaire d'un message texte ;
- où la recherche des informations de contact que l'abonné doit transmettre dans la liste de contacts du terminal mobile conformément au code Unicode comprend de rechercher des informations de contact par l'intermédiaire de SQlite ; et
- où l'étape comprenant d'appeler l'interface de programmation d'application de liste de contacts pour entrer dans la liste de contacts du terminal mobile et l'étape comprenant de rechercher les informations de contact que l'abonné doit transmettre dans la liste de contacts du terminal mobile conformément au code Unicode sont des opérations en arrière-plan.
